## Europäisches Patentamt
## European Patent Office
## Office européen des brevets

(11) Veröffentlichungsnummer: **0 310 667**
**A1**

# EUROPÄISCHE PATENTANMELDUNG
Veröffentlicht nach Art. 158 Abs. 3 EPÜ

(21) Anmeldenummer: **87904362.8**

(22) Anmeldetag: **23.04.87**

Daten der zugrundeliegenden internationalen Anmeldung:

(86) Internationale Anmeldenummer:
**PCT/SU87/00047**

(87) Internationale Veröffentlichungsnummer:
**WO88/08347 (03.11.88 88/24)**

(51) Int. Cl.³: **B 23 B 19/00**

(43) Veröffentlichungstag der Anmeldung:
**12.04.89 Patentblatt 89/15**

(84) Benannte Vertragsstaaten:
**AT DE FR IT SE**

(71) Anmelder: **FIZIKO-TEKHNICHESKY INSTITUT AKADEMII NAUK BELORUSSKOI SSR**
**ul. Zhodinskaya, 4**
**Minsk, 220730(SU)**

(72) Erfinder: **YASCHERITSYN, Petr Ivanovich**
**Leninsky pr., 18-102**
**Minsk, 220050(SU)**

(72) Erfinder: **BORISENKO, Alexandr Vasilievich**
**Leninsky pr., 127-178**
**Minsk, 220114(SU)**

(72) Erfinder: **LEBEDEV, Vladimir Yakovlevich**
**ul. S.Esenina, 6-3-150**
**Minsk, 220045(SU)**

(72) Erfinder: **PODREZENKOV, Vladimir Valeryanovich**
**Leninsky pr., 91-143**
**Minsk, 220012(SU)**

(74) Vertreter: **Lehn, Werner, Dipl.-Ing. et al,**
**Hoffmann, Eitle & Partner Patentanwälte Arabellastrasse 4**
**D-8000 München 81(DE)**

(54) **SPINDELEINHEIT.**

(57) Die Erfindung bezieht sich auf den Werkzeugmaschinenbau, insbesondere auf Spindeleinheiten für Werkzeugmaschinen.

Die erfindungsgemäße Spindeleinheit steigert die Qualität der bearbeiteten Oberfläche und erhöht die Standzeit des Schneidelementes. Erfindungsgemäß enthält eine Einrichtung (10) zur Regelung der Verspannung von Stützlagern (7 und 9) zwei koaxial angeordnete Hulsen (24 und 27), bei welchen die Außenflächenbereiche (25 und 26) der umgriffenen Hülse (24) und die Innenflächenbereiche (28 und 29) der umgreifenden Hülse (27) kegelförmig ausgebildet sind, und zwischen den Kegelbereichen (25 und 28, 26 und 29) der Hülsen (24 und 27) befindliche Wälzkörper (30), wobei die Hülse (24) auf der Spindel (4) bewegbar gelagert und die Hülse (27) in einem Gehäuse (1) starr befestigt ist. Der Kegelwinkel ($\alpha$) auf der Seite des vorderen Stützlagers (7) der Hülse (27) ist kleiner als der Kegelwinkel ($\beta$) der Hülse (24), während der Kegelwinkel ($\beta_1$) der Hülse (27) auf der Seite des hinteren Stützlagers (9) größer ist als der Kegelwinkel ($\alpha_1$) der Hülse (24).

FIG. 1

SPINDELEINHEIT

Technisches Gebiet

Die vorliegende Erfindung bezieht sich auf den Werkzeugmaschinenbau, insbesondere auf eine Spindeleinheit.

Zugrundeliegender Stand der Technik

Bekannt sind Spindeleinheiten verschiedener Bauart die ein Gehäuse, eine ein Schneidwerkzeug tragende Spindel und Lagerungen enthalten (E.G. Konovalov u.a. "Progressivnye skhemy rotatsionnogo rezania metallov /Fortschrittliche Anordnungen für Metall-Rotationssspannung/", Verlag "Nauka i tekhnika", Minsk, 1972, S. 189 bis 192, 203, 231, 236).

Nachteilig bei diesen Konstruktionen ist die Notwendigkeit, die Spindel mit einer Mutter einzuspannen, mit deren Hilfe, es in der Praxis sehr schwer ist, für die Lager erforderliche Einspannkraft und somit erforderliches Drehmoment in den Lagerungen zu erzeugen. Die Lagereinspannkraft hängt von den in den Lagerungen verwendeten Lagern, den physikalisch-mechanischen Eigenschaften des zu bearbeitenden Materials und Schnittbedingungen (Schnittgeschwindigkeit, Schnittiefe und Vorschub), von der Verringerung der Spannkraft bei Lagerverschleiß, von der Aufnahme der axialen Schnittkraftkomponente durch nicht alle Lagerungen ab. Dadurch wird die bearbeitete Oberfläche verschlechtert und die Standzeit des Schneidwerkzeuges verringert.

Der vorgeschlagenen Erfindung kommt die Konstruktion einer Spindeleinheit am nächsten, die eine ein Schneidwerkzeug tragende und in einem Gehäuse in Lagerungen mit Stützlagern eingebaute Spindel sowie eine Einrichtung zur Regelung der Verspannung der Stützlager enthält, die zwischen den Lagerungen montiert ist (SU, A, 1 122 733).

Die Einrichtung zur Regelung der Verspannung der Lager enthält zwei auf der Spindel axial verschiebbar gelagerte Abstandshülsen, einen zwischen den Hülsen gelagerten radial verschiebbaren Ringkeil und einen in Form einer Feder ausgebildeten Belastungsstabilisator, der zwischen der Stirnseite einer der Abstandshülsen und einem der Stützlager angeordnet ist.

Nachteilig bei dieser Konstruktion ist unterschiedliche Starrheit der die axiale Schnittkraftkomponente aufnehmenden Lagerungen (die eine Lagerung
ist durch .die Spannkraft summiert mit der axialen
Schnittkraftkomponente belastet, die andere ist durch
die Spannkraft abzüglich der axialen Schnittkraftkomponente belastet). Beim Anlegen der Belastung kann, wenn
die Lager nicht ausreichend eingespannt sind, eines
der Lager entlastet werden, wobei im Lager Spiele entstehen können, was Schwingungen herbeiführen und die
Qualität der bearbeiteten Oberfläche beeinträchtigen
wird. Beim Anlegen der Belastung im Falle der Überspannung wird die bearbeitete Oberfläche wegen der Differenz
der Lineargeschwindibkeit von Werkstück und Werkzeug durch
die Freifläche des Schneidwerkzeuges abgerieben, während
bei Bearbeitung diskontinuierlicher · Oberflächen die
Überspannung zur schnellen Stillsetzung der Schneidwerkzeugdrehung beim Leerlauf führt. Alles das führt zur
Verringerung der Starrheit der Konstruktion der Spindeleinheit und der Standzeit des Werkzeuges und somit
zur Erniedrigung der Bearbeitungsqualität.

Beim Zusammenbau der Spindeleinheit werden die Stützlager überdies durch radiale Verschiebung des Ringkeils
vorgespannt. Des weiteren wird die Spindel unter der
Wirkung der Schnittkraft beim Bearbeitungsvorgang in Richtung der Schnittkraft verschoben. Im Zusammenhang mit
der ortsfesten Anordnung der Abstandshülsen in bezug auf
das Gehäuse nimmt die ursprüngliche Verspannung des vorderen Stützlagers um die Größe der axialen Schnittkraftkomponente zu, während die ursprüngliche Verspannung
des hinteren Stützlagers um die Größe der axialen Schnittkraftkomponente abnimmt, was seinerseits die bearbeitete
Oberfläche verschlechtert.

Offenbarung der Erfindung

Der vorliegenden Erfindung liegt die Aufgabe zugrunde, eine Spindeleinheit mit einer solchen konstruktiven Ausführung der Einrichtung zur Regelung der Verspannung der Stützlager zu schaffen die es erlaubt, das vordere und das hintere Stützlager gleich zu belasten und ihre Verspannung in Abhängigkeit von der beim Bearbeitungsvorgang erfolgenden Änderung der Schnittkräfte zu verändern, was seinerseits die Schwingungsfreiheit der Konstruktion und somit die Qualität der bearbeiteten Oberfläche erhöht.

Die gestellte Aufgabe wird dadurch gelöst, daß bei der Spindeleinheit, die eine in einem Gehäuse in Lagerungen mit einem vorderen und einem hinteren Stützlager eingebaute Spindel und eine zwischen den Lagerungen montierte Einrichtung zur Regelung der Verspannung der Stützlager enthält, erfindungsgemäß die Einrichtung zur Regelung der Verspannung der Stützlager zwei koaxial angeordnete Hülsen aufweist, wobei die umgriffene auf der Spindel entlang der Spindelachse zwischen den Stützlagern bewegbar gelagert ist und an den Stirnseiten kegelförmig ausgebildete Außenflächenbereiche besitzt, während die umgreifende im Gehäuse starr befestigt ist und an den Stirnseiten kegelförmig ausgebildete Innenflächenbereiche aufweist, und zwischen den Kegelbereichen der Hülsen befindliche Wälzkörper enthält, wobei der Kegelwinkel der unbeweglich befestigten Hülse auf der Seite des vorderen Stützlagers kleiner ist als der Kegelwinkel der bewegbar gelagerten Hülse, während auf der Seite des hinteren Stützlagers der Kegelwinkel der unbeweglich befestigten Hülse größer ist als der Kegelwinkel der bewegbar gelagerten Hülse.

Mit der vorgeschlagenen Konstruktion werden durch die Wälzkörper bei ihrer Bewegung über die Kegelbereiche der Hülsen während des Betriebes gleiche Belastungen des vorderen und des hinteren Stützlagers erreicht. Durch die erreichten gleichen Belastungen der Stützlager wird die Steifigkeit der Konstruktion der Spindeleinheit erhöht und die Schwingung ihrer Elemente vermieden. Dadurch wird ihrerseits die Qualität der bearbeiteten Oberfläche erhöht.

Um Berechnungen bei der Herstellung der Spindeleinheit zu vereinfachen, ist zweckmäßig, daß der Kegelwinkel der umbeweglich befestigten Hülse auf der Seite
des vorderen Stützlagers gleich ist dem Kegelwinkel
der bewegbar gelagerten Hülse auf der Seite des hinteren Stützlagers, während der Kegelwinkel der bewegbar gelagerten Hülse auf der Seite des vorderen Stützlagers gleich ist dem Kegelwinkel der unbeweglich befestigten Hülse auf der Seite des hinteren Stützlagers.

Besonders zweckmäßig ist, daß der Kegelwinkel der
unbeweglich befestigten Hülse auf der Seite des vorderen Stützlagers und der Kegelwinkel der bewegbar
gelagerten Hülse auf der Seite des hinteren Stützlagers
in einem Bereich im wesentlichen von $30^o$ bis $45^o$ gewählt ist, während der Kegelwinkel der bewegbar gelagerten Hülse auf der Seite des vorderen Stützlagers und
der Kegelwinkel der unbeweglich befestigten Hülse auf
der Seite des hinteren Stützlagers in einem Bereich im
wesentlichen von $40^o$ bis $65^o$ gewählt ist, wobei auch
zweckmäßig ist, daß die Summengröß der Kegelwinkel der
Hülsen auf jeder der Seiten der Stützlager in einem
Bereich im wesentlichen von $40^o$ bis $110^o$ gewählt ist.

Weichen die Kegelwinkel der Hülsen von den erwähnten Bereichen ab, nehmen die Reibungskräfte in den Bestandteilen der Einrichtung zur Regelung der Verspannung
sprunghaft zu, wodurch es nicht möglich ist, die gleichen Belastungen des vorderen und des hinteren Stützlagers zu erreichen und die Verspannung in ihnen in Abhängigkeit von der beim Bearbeitungsvorgang erfolgenden
Änderung der Schnittkräfte zu veränden.

Besonders erwünscht ist, daß die Kegelwinkel der
Hülsen aus der Beziehung

$$\operatorname{tg}\beta(\beta_1) = \left[\operatorname{tg}\alpha(\alpha_1) + \frac{2R}{L} + \operatorname{tg}4\gamma\right]\frac{c_2}{c_1}$$

gewählt werden, worin bedeuten:

$\alpha$ – Kegelwinkel der unbeweglich befestigten Hülse auf der Seite des vorderen Stützlagers, Grad;

$\alpha_1$ – Kegelwinkel der bewegbar gelagerten Hülse auf der Seite des hinteren Stützlagers, Grad;

$\beta$ – Kegelwinkel der bewegbar gelagerten Hülse auf der Seite des vorderen Stützlagers, Grad;

$\beta_1$ – Kegelwinkel der un beweglich befestigten Hülse auf der Seite des hinteren Stützlagers, Grad;

2 – Anzahl der Lagerungen;

R – Zulässige Nenndurchmesserabweichung der Laufbahn auf dem Innenring (Außenring) der Radiallager, mm;

L aus konstruktiven Erwägungen heraus gewählter Abstand der Lagerungen, mm;

4 – Anzahl der Kegelflächen zweier Hülsen;

$\gamma$ – zulässige Abweichung vom Nennwert für jeden Kegelwinkel der Hülsen, Grad;

$C_1$ – aus konstruktiven Erwägungen heraus gewählte dynamische Tragfähigkeit des vorderen Stützlagers, H;

$C_2$ – aus konstruktiven Erwägungen heraus gewählte dynamische Tragfähigkeit des hinteren Stützlagers, H.

Kurze Beschreibung der Zeichnungen

Nachfolgend wird die vorliegende Erfindung durch eingehende Beschreibung eines konkreten Beispiels ihrer Ausführung mit Hinweisen auf beigefügte Zeichnungen näher erläutert, in denen es zeigen:

Fig. 1 eine Gesamtansicht der erfindungsgemäßen Spindeleinheit im teilweisen Längsschnitt;

Fig. 2 eine Einrichtung zur Regelung der Stützlager der erfindungsgemäßen Spindeleinheit im vergrößerten Maßstab im teilweisen Längsschnitt.

Beste Ausführungsform der Erfindung

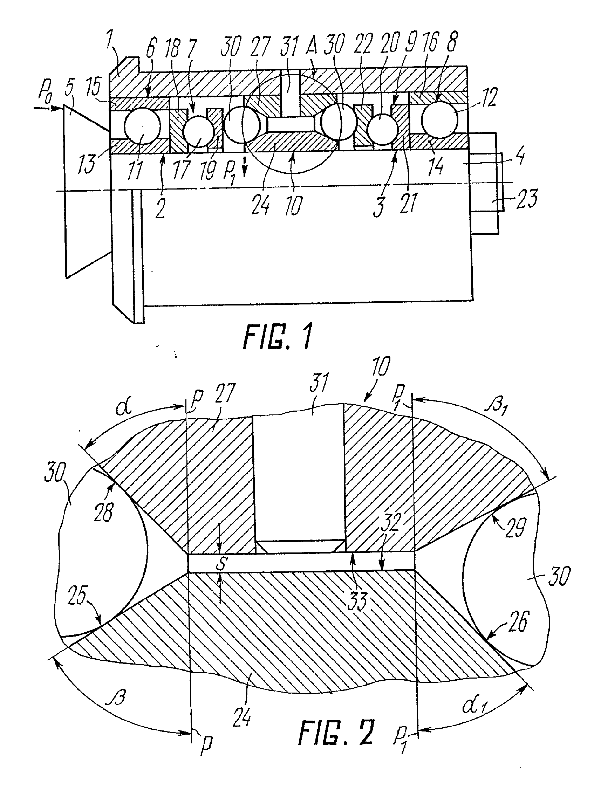

Die in Fig. 1 gezeigte erfindungsgemäße Spindeleinheit enthält eine in einem Gehäuse 1 in einer vorderen und einer hinteren Lagerung 2 bzw. 3 montierte Spindel 4, die ein Schneidelement 5 trägt. Die Lagerung 2 enthält ein vorderes Radiallager 6 und ein vorderes Stützlager 7, während die Lagerung 3 ein hinteres Radiallager 8 und ein hinteres Stützlager 9 enthält.

Die Spindeleinheit enthält auch eine zwischen den Lagerungen 2 und 3 montierte Einrichtung 10 (Fig. 2) zur Regelung der Verspannung der Stützlager 7 und 9.

Die Radiallager 6 und 8 bestehen aus Kugeln 11 (Fig. 1) bzw. 12, die zwischen einem Innenring 13 bzw. 14 und einem Außenring 15 bzw. 16 angeordnet sind. Das vordere Stützlager 7 besteht aus Kugeln 17, die zwischen einem Ring 18 auf der Seite des vorderen Radiallagers 6 und einem Ring 19 auf der Seite der Einrichtung 10 zur Regelung der Verspannung der Stutzlager 7 und 9 angeordnet sind, während das hintere Stützlager 9 aus Kugeln 20 besteht, die zwischen einem Ring 21 auf der Seite des hinteren Radiallagers 8 und einem Ring 22 auf der Seite der Einrichtung 10 zur Regelung der Verspannung der Stützlager 7 und 9 angeordnet sind.

Die Vorspannung der Stützlager 7 und 9 wird durch eine Mutter 23 ermöglicht, die am Ende der Spindel 4 gelagert ist, das dem Ende entgegengesetzt ist, wo das Schneidelement 5 befestigt ist.

Gemäß der Erfindung enthält die Einrichtung 10 (Fig. 2) zur Regelung der Verspannung der Stützlager 7 und 9 eine Hülse 24, die an den Stirnseiten kegelförmig ausgebildete Außenflächenbereiche 25 und 26 aufweist, eine Hülse 27, die an ihren Stirnseiten ebenfalls kegelförmig ausgebildete Innenflächenbereiche 28 und 29 aufweist, und zwischen den Kegelbereichen 25 und 28, 26 und 29 der Hülsen 24 und 27 befindliche Wälzkörper 30.

Die Hülse 24 ist auf der Spindel 4 entlang der Achse der Spindel 4 zwischen den Stützlagern 7 und 9 bewegbar gelagert. Die Hülse 27 ist im Gehäuse 1 mittels eines Stiftes 31 starr befestigt. Die Hülsen 24 und 27 sind dabei im Gehäuse 1 koaxial angeordnet derart, daß die Hülse 24 umgreifend und die Hülse 27 umgriffen ist.

Zur Vermeidung der Reibung aneinander sind die Hülsen 24 und 27 mit einem Spiel 3 zwischen ihren Zylinderflächen 32 und 33 montiert.

Nachfolgend ist in der Beschreibung unter dem gebrauchten Fachbegriff "Kegelwinkel" der Winkel zu verstehen, den jeder Kegelbereich 25, 26, 28, 29 der Oberfläche der beiden Hülsen 24 und 27 und die zur Längsachse der jeweiligen Hülse gefällte Senkrechte $p$ und $p_1$ bilden.

Der Kegelwinkel $\alpha$ ist somit durch den Kegelbereich 28 der Hülse 27 und die gefällte Senkrechte $p$ zur Längsachse dieser Hülse 27 gebildet, der Kegelwinkel $\beta$ ist durch den Kegelbreich 25 der Hülse 24 und die gefällte Senkrechte $p$ zur Längsachse dieser Hülse 24 gebildet, der Kegelwinkel $\alpha_1$ ist durch den Kegelbereich 26 der Hülse 24 und die gefällte Senkrechte $p_1$ zur Längsachse dieser Hülse 24 gebildet, während der Kegelwinkel $\beta_1$ durch den Kegelbereich 29 der Hülse 27 und die gefällte Senkrechte $p_1$ zur Längsachse dieser Hülse 27 gebildet ist.

Der Kegelwinkel $\alpha$ der unbeweglich befestigten Hülse 27 ist dabei auf der Seite des vorderen Stützlagers 7 kleiner als der Kegelwinkel $\beta$ der bewegbar gelagerten Hülse 24, während der Kegelwinkel $\beta_1$ der umbeweglich befestigten Hülse 27 auf der Seite des hinteren Stützlagers 9 größer ist als der Kegelwinkel $\alpha_1$ der bewegbar gelagerten Hülse 24.

Des weiteren ist der Kegelwinkel $\alpha$ der unbeweglich befestigten Hülse 27 auf der Seite des vorderen Stützlagers 7 gleich dem Kegelwinkel $\alpha_1$ der bewegbar gelagerten Hülse 24 auf der Seite des hinteren Stützlagers 9, während der Kegelwinkel $\beta$ der bewegbar gelagerten

- 8 -

Hülse 24 auf der Seite des vorderen Stützlagers 7 gleich ist dem Kegelwinkel $\beta_1$ der unbeweglich befestigten Hülse 27 auf der Seite des hinteren Stützlagers 9.

Hierbei sind den Kegelwinkel $\alpha$ der umbeweglich befestigten Hülse 27 auf der Seite des vorderen Stützlagers 7 und der Kegelwinkel $\alpha_1$ der bewegbar gelagerten Hülse 24 auf der Seite des hinteren Stützlagers 9 in einem Bereich im wesentlichen von 30° bis 45° wählt, während der Kegelwinkel $\beta$ der bewegbar gelagerten Hülse 24 auf der Seite des vorderen Stützlagers 7 und der Kegelwinkel $\beta_1$ der unbeweglich befestigten Hülse auf der Seite des hinteren Stützlagers 9 in einem Bereich im wesentlichen von 40° bis 65° gewählt sind. Die summengröße der Kegelwinkel $\alpha$ und $\beta$ auf der Seite des vorderen Stützlagers 7 und der Kegelwinkel $\alpha_1$ und $\beta_1$ auf der Seite des hinteren Stützlagers 9 liegt in einem Bereich im wesentlichen von 70° bis 110°.

Die Kegelwinkel $\alpha$ ( $\alpha_1$ ) und $\beta$ ( $\beta_1$ ) der Kegelbereiche 28, 26 und 25, 29 der Hülsen 24 und 27 werden aus der Beziehung

$$tg\,\beta(\beta_1) = \left[tg\,\alpha(\alpha_1) + \frac{2R}{L} + tg\,4\gamma\right]\frac{c_2}{c_1}$$

definiert, worin bedeuten:

$\alpha$ – Kegelwinkel des Kegelbereiches 28 der unbeweglich befestigten Hülse 27 auf der Seite des vorderen Stützlagers 7, Grad;

$\alpha_1$ – Kegelwinkel des Kegelbereiches 26 der bewegbar gelagerten Hülse 24 auf der Seite des Stützlagers 9, Grad;

$\beta$ – Kegelwinkel des Kegelbereiches 25 der bewegbar gelagerten Hülse 24 auf der Seite des vorderen Stützlagers 7, Grad;

$\beta_1$ – Kegelwinkel des Kegelbereiches 29 der unbeweglich befestigten Hülse 27 auf der Seite des hinteren Stützlagers 9, Grad;

2 - Anzahl der Lagerungen 2 und 3;

R - zulässige Nenndurchmesserabweichung der Laufbahn auf dem Innenring (Außenring) des Radiallagers 6 und 8, mm;

L - aus konstruktiven Erwägungen heraus gewählter Abstand der Lagerungen 2 und 3, mm;

4 - Anzahl der Kegelflächen 25, 26, 28, 29 der beiden Hülsen 24 und 27;

$\gamma$ - zulässige Abweichung vom Nennwert für jeden Kegelwinkel $\alpha, \alpha_1, \beta, \beta_1$. Grad;

$C_1$ - aus konstruktiven Erwägungen heraus gewählte dynamische Tragfähigkeit des vorderen Stützlagers 7, H;

$C_2$ - aus konstruktiven Erwägungen heraus gewählte dynamische Tragfähigkeit des hinteren Stützlagers 9, H.

Die Spindeleinheit funktioniert folgenderweise.

Die Spindeleinheit wird im (in Fig. nicht eingezeichneten) Meisselhalter einer Zerspanungsmaschine eingesetzt. Beim Zerspanvorgang wird die Spindel 4 zusammen mit dem vorderen Stützlager 7 unter der Wirkung der axialen Schnittkraftkomponente $P_0$ (Fig. 1) in Richtung der axialen Schnittkraftkomponente $P_0$ zurückbewegt, wobei der zwischen den Kegelbereichen 25, 26 und 28, 29 der Hülsen 24 und 27 befindliche Wälzkörper 30 bewegt wird. Die im Gehäuse 1 befestigte Hülse 27 wirkt mit ihrem Kegelbereich 28 auf den Wälzkörper 30 ein und zwingt ihn zum Sinken und zum Einwirken auf den Kegelbereich 25 der bewegbar gelagerten Hülse 24 in Richtung der Kraft $P_1$, wodurch diese Hülse in Richtung der axialen Schnittkraftkomponente $P_0$ ebenfacgs zurückbewegt wird. Durch die Differenz der Winkel $\alpha$ ($\alpha_1$) und $\beta$ ($\beta_1$), d.h. dadurch, daß bei den Kegelbereichen 25, 26 und 28, 29 der Hülsen 24 und 27 der Winkel $\beta$ ($\beta_1$) größer ist als der Winkel $\alpha$ ($\alpha_1$), überschreitet die Verschiebungsgröße der beweglich gelagerten Hülse 24 die Verschiebungsgröße der Spindel 4.

Die Verschiebung der bewegbar gelagerten Hülse 24 bewirkt eine ähnliche Bewegung des zwischen den Kegelflächen 26 und 29 der Hülsen 24 und 27 befindlichen Wälzkörpers 30, der auf das hintere Stützlager 9 ein wirkt. Da die Mutter 23 keine Bewegung des Lagers 9 zuläßt, werden die Lager 7 und 9 "auseinandergetrieben", während die Verschiebung der Spindel 4 durch die Größe der elastischen Verformungen der Stützlager 7 und 9 begrenzt wird. Bei Belastungsänderung (z.B. bei Änderung den Zugabe) wird die Schnittkraft und somit auch die Axialkomponente dieser Kraft verändert, die auf die Lager 7 und 9 und auf sämtliche Elemente der Einrichtung 10 zur Verspannungsregelung wirkt. Je nach der Verringerung bzw. Vergörßerung der Schnittkraft wird die Einspannkraft der Lager 7 und 9 selbsttätig verringert oder vergrößert. Bei der Beendigung der Zerspanng werden die Lager vollständig entlastet.

Zur gleichmäßigen Verteilung der Belastung zwischen den Stützlagern 7 und 9 müssen sich die Winkel $\alpha$ ($\alpha_1$) und $\beta$ ($\beta_1$) den Werten nach einander annähern, dürfen jedoch nicht gleich sein, da sonst die Lager 7 und 9 nicht "auseinandergetrieben" und die Spindel 4 zur Mutter 23 hin ohne Begrenzung zurückbewegt würden. Die minimale erforderliche Differenzgröße der Winkel $\alpha$ ($\alpha_1$) und $\beta$ ($\beta_1$) wird auch ausgehend von der Formel

$$tg\,\beta(\,\beta_1\,) = \left[tg\,\alpha(\alpha_1\,) + \frac{2R}{L} + tg\,4\gamma\right]\frac{c_2}{c_1}$$

definiert.

Nachfolgend sind konkrete Beispiele für die Durchführung der vorliegenden Erfindung angeführt, die in einer Tabelle zusammengefasst wurden.

Die Bedingungen bei der Bearbeitung war folgende:

n Spindeldrehzahl, U/min;

S Längsvorschub, mm/U;

t Spantiefe, mm.

Die Ergebnisse der Bearbeitung waren folgende:

$R_a$ Höhe der Raunigkeiten auf der bearbeiteten Oberfläche, $\mu$m;

h Abnutzungsmaß en der Freifläches des Schneidelementes, $\mu$m;

l Schnittweglänge, $\mu$m.

Tabelle

| lfd Nr. der Spindeleinheit | Winkel | Winkel | n, U/min | S, mm/U | t, mm | $R_a$, $\mu$m | l, $\mu$m (bei 20 km) |
|---|---|---|---|---|---|---|---|
| 1 | 40 | 41 | 1 600 | 0,39 | 0,3 | 1,02 | 0,18 |
| 2 | 55 | 74 | 1 600 | 0,39 | 0,3 | 1,02 | 0,18 |

Aus. der Tabelle ist ersichtlich, daß der angemeldete Meißel hinsichtlich der Rauheit der bearbeiteten Oberfläche und der Standzeit hohe Ergebnisse zeigt. Im Vergleich zum Prototyp nimmt die Höhe der Rauhigkeiten etwa um 16% und vas Abnutzungsmaß beim Schneidelement um 55 % ab.

Die gezeigte Konstruktion der Einrichtung zur Verspannungsregelung ermöglicht die Aufnahme der Axialbelastungen durch die beiden Stutzlagerungen und die selbsttätige Änderung der Verspannungsgröße der Lager in Abhängigkeit von den Schnittkraftschwankungen bei geänderten Bedingungen der spangebenden Metallbearbeitung und bei sonstigen geänderten Bedingungen, wodurch die Qualität der bearbeiteten Oberfläche und die Standzeit des Werkzeuges erhöht werden.

Gewerbliche Verwertbarkeit

Aufgrößtem Erfolg kann die Erfindung bei Werkzeugmaschinen zur Metallbearbeitung mit einem Rotationswerkzeug angewendet werden..

Die Erfindung ist auch bei anderen Zerspannungsmaschinen anwendbar, z.b. Bei Fräs-, Drehmaschinen sowie bei Maschinen zur Holz-, Kunststoffbearbeitung usw.

P A T E N T A N S P R Ü C H E

1. Spindeleinheit, die eine in einem Gehäuse (1) in Lagerungen (2 und 3) mit einem vorderen (7) und einem hinteren (9) Stützlager montierte Spindel (4) und eine zwischen den Lagerungen (2 und 3) montierte Einrichtung (10) zur Regelung der Verspannung der Stützlager (7 und 9) enthält, d a d u r c h  g e - k e n n z e i c h n e t , daß die Einrichtung (10) zur Regelung der Verspannung der Stützlager (7 und 9) zwei koaxial angeordnete Hülsen (24 und 27) aufweist, wobei die umgriffene Hülse (24) auf der Spindel (4) entlang der Achse der Spindel (4) zwischen den Stützlagern (7 und 9) bewegbar gelagert ist und an den Stirnseiten kegelförmig ausgebildete Außenflächenbereiche (25 und 26) besitzt, während die umgreifende Hülse (27) im Gehäuse (1) starr befestigt ist und an den Stirnseiten kegelför- mig ausgebildete Innenflächenbereiche (28 und 29) aufweist, und zwischen den Kegelbereichen (25 und 28, 26 und 29) der Hülsen (24 und 27) befindliche Wälzkörper (30) enthält, wobei der Kegelwinkel ($\alpha$) der unbe- weglich befestigten Hülse (27) auf der Seite des vorderen Stützlagers (7) kleiner ist als der Kegelwinkel ($\beta$) der bewegbar gelagerten Hülse (24), während auf der Seite des hinteren Stützlagers (9) der Kegelwinkel ($\beta_1$) der unbeweglich befestigten Hülse (27) größer ist als der Kegelwinkel ($\alpha_1$) der bewegbar gelagerten Hülse (24).

2. Spindeleinheit nach Anspruch 1, d a d u r c h  g e k e n n z e i c h n e t , daß der Kegelwinkel ($\alpha$) der unbeweglich befestigten Hülse (27) auf der Seite des vorderen Stützlagers (7) gleich ist dem Kegel- winkel ($\alpha_1$) der bewegbar gelagerten Hülse (24) auf der Seite des hinteren Stützlagers (9), während der Kegel- winkel ($\beta$) der bewegbar gelagerten Hülse (24) auf der Seite des vorderen Stützlagers (7) gleich ist dem Kegelwinkel ($\beta_1$) der unbeweglich befestigten Hülse (27) auf der Seite des hinteren Stützlagers (9).

3. Spindeleinheit nach Ansprüchen 1 und 2, d a d u r c h   g e k e n n z e i c h n e t , daß der Kegelwinkel ( $\alpha$ ) der unbeweglich befestigten Hülse (27) auf der Seite des vorderen Stützlagers (7) und der Kegelwinkel ( $\alpha_1$ ) der bewegbar gelagerten Hülse (24) auf der Seite des hinteren Stützlagers (9) in einem Bereich im wesentlichen von 30° bis 45° gewählt sind, während der Kegelwinkel ( $\beta$ ) der bewegbar gelagerten Hülse (24) auf der Seite des vorderen Stützlagers (7) und der Kegelwinkel ( $\beta_1$ ) der unbeweglich befestigten Hülse (27) auf der Seite des hinteren Stützlagers (9) in einem Bereich im wesentlichen von 40° bis 65° gewählt sind, wobei die Summengröße der Kegelwinkel ( $\alpha, \alpha_1, \beta, \beta_1$ ) der Hülsen (24 und 27) auf jeder der Seiten der Stützlager (7 und 9) in einem Bereich im wesentlichen von 70° bis 110° liegt.

4. Spindeleinheit nach Ansprüchen 1 bis 3, d a d u r c h   g e k e n n z e i c h n e t , daß die Kegelwinkel ( $\alpha, \alpha_1, \beta, \beta_1$ ) der Hülsen (24 und 27) aus der Beziehung

$$tg\,\beta(\beta_1) = \left[ tg\,\alpha(\alpha_1) + \frac{2R}{L} + tg\,4\gamma \right] \frac{c_2}{c_1}$$

definiert werden, worin bedeuten:

$\alpha$ - Kegelwinkel der unbeweglich befestigten Hülse (27) auf der Seite des vorderen Stützlagers (7), Grad;

$\alpha_1$ - Kegelwinkel der bewegbar gelagerten Hülse (24) auf der Seite des hinteren Stützlagers (9), Grad;

$\beta$ - Kegelwinkel der bewegbar gelagerten Hülse (24) auf der Seite des vorderen Stützlagers (7), Grad;

$\beta_1$ - Kegelwinkel der unbeweglich befestigten Hülse (27) auf der Seite des hinteren Stützlagers (9), Grad;

2 - Anzahl der Lagerungen (2 und 3);

R   -   zulässige Nenndurchmesserabweichung der
        Laufbahn auf dem Innenring (13, 14)
        (Außenring (15, 16 ) ) des Radiallagers
        (6 und 8), mm;

L   -   aus Konstruktiven  Erwägungen heraus gewählter  Abstand der Lagerungen (2 und 3), mm;

4   -   Anzahl der Kegelflächen der beiden Hülsen
        (24 und 27);

$\gamma$   -   zulässige Abweichung vom Nennwert für jeden
        Kegelwinkel ($\alpha, \alpha_1, \beta, \beta_1$) der Hülsen (24
        und 27), Grad;

$C_1$   -   aus konstruktiven Erwägungen heraus  gewählte dynamische Tragfähigkeit des vorderen
        Stützlagers (7), H;

$C_2$   -   aus konstruktiven Erwägungen heraus gewählte
        dynamische Tragfähigkeit des hinteren Stütz-
        lagers (9), H.

0310667

– 1 –

FIG. 1

FIG. 2

# INTERNATIONAL SEARCH REPORT

PCT/SU 87/00047

International Application No

## I. CLASSIFICATION OF SUBJECT MATTER (if several classification symbols apply, indicate all) [6]

According to International Patent Classification (IPC) or to both National Classification and IPC

IPC[4]     B 23 B 19/00

## II. FIELDS SEARCHED

| Minimum Documentation Searched [7] | |
|---|---|
| Classification System | Classification Symbols |
| IPC[4] | B 23 B 19/00, 19/02, 27/12 |

Documentation Searched other than Minimum Documentation
to the Extent that such Documents are Included in the Fields Searched [8]

## III. DOCUMENTS CONSIDERED TO BE RELEVANT [9]

| Category * | Citation of Document, [11] with indication, where appropriate, of the relevant passages [12] | Relevant to Claim No. [13] |
|---|---|---|
| A | SU, A1, 1144778, (Novopolotsky politekhnichesky institut im Leninskogo komsomola Belorussii), 15 March 1985 (15.03.85) see column 1, lines 37-41, column 2, lines 1-36 | 1,2 |
| A | SU, A1, 539689, (Ukrainsky nauchno-issledovatelsky institut stankov i instrumentov) 29 September 1977 (29.09.77) see column 2, lines 4-30 | 1,2 |
| A | SU, A1, 551457, (Ukrainsky nauchno-issledovatelsky institut stankov i instrumentov), 15 June 1977 (15.06.77), see column 2, lines 4-10 | 3,4 |
| A | SU, A1, 743787, (Ukrainsky nauchno-issledovatelsky institut stankov i instrumentov), 30 June 1980 (30.06.80) see column 2, lines 9-30, column 3, lines 1-5 | |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 16 November 1987 (16.11.87) | 14 January 1988 (14.01.88) |

| International Searching Authority | Signature of Authorized Officer |
|---|---|
| ISA/SU | |

Form PCT/ISA/210 (second sheet) (January 1985)